# EUROPEAN PATENT APPLICATION

(11) **EP 2 455 581 A2**
(43) Date of publication of application: **23.05.2012**
(21) Application number: 11075239.1
(22) Date of filing: 31.10.2011
(51) Int. Cl.: E21B 43/267, E21B 47/10, C09K 8/80

(54) **Methods and compositions for determination of fracture geometry in subterranean formations**

(30) Priority: 14.10.2011 US 274056; 08.11.2010 US 941597
(71) Applicant: Momentive Specialty Chemicals Research Belgium S.A., 1348 Ottignies Louvain-la-Neuve (BE)
(72) Inventor: Green, John W., Stafford, Texas 77477-3788 (US); Mc Crary, Avis Lloyd, Stafford, Texas 77477-3788 (US); Mc Daniel, Robert R., Stafford, Texas 77477-3788 (US)

(57) **Abstract**

Articles and methods utilizing radiation susceptible materials are provided herein. In one aspect, a proppant (10), a treatment fluid, or both, may comprise a radiation susceptible material (6). In another aspect, a method is provided comprising disposing in a formation fracture, a proppant and/or a treatment fluid that comprises a radiation susceptible material, irradiating the radiation susceptible material with neutrons, measuring gamma-radiation emitted from the radiation susceptible material in a single pass, and determining formation fracture height from the measured gamma-radiation. The single-pass may be a continuous process or a periodic process.

## Description

### FIELD OF THE INVENTION

This disclosure relates to methods and compositions for determining fracture geometry in subterranean formations.

### BACKGROUND

The yield of hydrocarbons, such as gas and petroleum, from subterranean formations can be increased by fracturing the formation in order to stimulate the flow of these hydrocarbons in the formation. Various formation fracturing procedures are now used, such as, for example, hydraulic fracturing in which liquids, gases and or combinations of both are injected into the formation under high pressure (usually with propping agents).

Hydraulic fracturing is often used in the industry for improving oil and natural gas production from subterranean formations. During a hydraulic fracturing operation, a fluid, generally termed a "pad", is pumped down a well at sufficient pressure to fracture open the formation surrounding the well. Once a fracture has been created, the pumping of the pad, along with a slurry phase that comprises both the liquid and a proppant, is begun until a sufficient volume of the proppant has been carried by the slurry into the fracture. After a suitable time, the pumping operation is stopped at which times the proppant will prop open the fracture in the formation, thereby preventing it from closing. As a result of the fracture, trapped hydrocarbons are provided a more conductive pathway to the wellbore than was previously available, thereby increasing the well's production. In addition to creating deep-penetrating fractures, the fracturing process is useful in overcoming wellbore damage, to aid in secondary operations, and to assist in the injection or disposal of produced formation brine water or industrial waste material.

During the fracturing process, the fractures propagate throughout the formation. The vertical propagation of these fractures is useful in determining the extent of fracture coverage as it relates to the producing interval. Fracture height measurements aid well operators in determining the success of the fracturing operation and, if necessary, to optimize future treatments, for other wells in the field. In addition, fracture height information can aid in the diagnosis of stimulation problems such as lower production rates or unfavorable water cuts. The fracture height data can indicate whether communication has been established between the producing formation and adjacent water or non-hydrocarbon producing formation zones. Height measurements also provide a check on the accuracy of fracture design simulators used prior to the job to predict fracture geometry. If excessive fracture height growth is determined, this would imply that the fracture length is shorter than the designed value.

As previously stated, one reason for monitoring the vertical propagation of a fracture is the concern for fracturing outside of a defined hydrocarbon-producing zone into an adjacent water-producing zone. When this occurs, water will flow into the hydrocarbon-producing zone and the wellbore, resulting in a well that produces mainly water instead of the desired hydrocarbon. Furthermore, if there is still the desire to continue producing hydrocarbons from the well, operators must solve the serious problem of safely disposing of the undesired water. Addressing the problems arising from an out of zone fracture will also add expenses to the operations. In addition, if the fracture propagates into an adjacent non-hydrocarbon producing formation, the materials used to maintain a fracture after the fluid pressure has decreased may be wasted in areas outside the productive formation area. In short, it is expensive to save a well that has been fractured out of the hydrocarbon-producing zone.

Because of the serious problems that can occur as a result of out of zone fractures, it is desirable to determine formation fracture development. There are several techniques and devices used for monitoring and evaluating formation fracture development such as radioactive tracers in the fracturing fluid, temperature logs, borehole televiewers, passive acoustics and gamma-ray logging. Most techniques provide some direct estimates of fractured zone height at the wellbore.

One process used to determine formation fracture height development employs a radioactive tracer. In this process, a fracturing fluid containing a radioactive tracer is injected into the formation to create and extend the fractures. When these radioactive fluid and proppant tracers are used, post fracture gamma-ray logs have shown higher levels of activity opposite where the tracer was deposited, thereby enabling operators to estimate the development of the fractures.

Another approach for determining fracture height uses temperature and gamma-ray logs. Temperature logs made before and after stimulation are compared to define an interval cooled by injection of the fracturing fluid and thus provide an estimate of the fractured zone. However, this technique is subject to limitations and ambiguities. For example, the temperature log may be difficult to interpret because of low temperature contrast, flowback from the formation before and after the treatment, or fluid movement behind the borehole casing. In addition, the use of radioactive tracers gives rise to environmental problems such as the pollution of underground water streams, and the like, and hence is undesirable.

Other methods for evaluating fracture geometry comprise using a borehole televiewer or using acoustical methods. Utilizing a borehole televiewer is limited in that it can only be used for fracture height evaluation in open holes. In addition, utilizing a borehole televiewer is limited due to the extreme temperature and pressure conditions present in deeper completions. Acoustical methods are hampered by inhomogeneous formation impedance and/or the need for pumping while the tool is in the hole.

In addition to the problems associated with each type of monitoring, there are inherent problems in the formation fracturing technology. During the fracturing process, fracture fluid is generally pumped into the formation at high pressure, to force open the fractures, and an increasing proportion of sand is added to the fluid to prop open the resulting fractures. One problem with the existing technology is that the methods for determining whether a formation has been fractured out of the production zone relies on post-treatment (after the fracture has occurred) measurements. In such systems, a fracturing treatment is performed, the treatment is stopped, the well is tested and the data is analyzed. Moreover, with existing detection systems, the wait for post-fracturing data can take a considerable amount of time, even up to several days, which can delay the completion operations, resulting in higher personnel and operating costs.

Another problem associated with existing post-process "logging" or measuring devices is that the cost associated with interrupting a fracturing job in order to make a measurement of a fracture is neither practical nor feasible. Because the fracturing fluid is pumped into a formation under high pressures during the fracturing process, temporarily halting the pumping during the fracturing operation will result in the application of pressure to the fracturing fluid by the walls of the formation fracture. This could lead to undesirable results such as the closing of the fractures, thereby causing the reversal of fluid flow back into the borehole, or the build-up of sand in the hole. In addition, after taking measurements and completing the logging process, operators cannot restart the pumping equipment at the point of the fracturing process immediately before the interruption. Instead, the operators would have to repeat the complete fracturing job at additional cost and with unpredictable results.

A monitoring system could address the above-described problems and would allow well operators to monitor the fracturing process, to control fracture dimensions and to efficiently place higher concentrations of proppants in a desired formation location. In addition, if there is information that a fracture is close to extending outside the desired zone, operators can terminate the fracturing job immediately. Furthermore, analysis of the ongoing treatment procedure will enable an operator to determine when it is necessary to pump greater concentrations of the proppant, depending on factors such as the vertical and lateral proximity of oil/water contacts with respect to the wellbore, the presence or absence of water-producing formations and horizontal changes in the physical properties of the reservoir materials.

It is therefore advantageous to monitor fracture geometry using methods and compositions that are inexpensive, predictable and environmentally friendly.

### SUMMARY

Disclosed herein is one embodiment of a method comprising disposing in a formation fracture, a proppant and/or a treatment fluid that comprises a radiation susceptible material; and during a single logging pass irradiating the radiation susceptible material with neutrons; measuring gamma-radiation emitted from the radiation susceptible material; subtracting background radiation from peak energy radiation emanating from the radiation susceptible material; and determining formation fracture height from the measured gamma-radiation.

Disclosed herein is one embodiment of a proppant comprising a substrate, a coating disposed upon the substrate, wherein the substrate and/or the coating comprise a radiation susceptible material.

Disclosed herein is one embodiment of a proppant comprising a composite substrate comprising an organic or inorganic material, a filler dispersed therein, and a radiation susceptible material.

Disclosed herein is one embodiment of a method for treating a subterranean formation, including disposing in a formation fracture, a proppant, a fracturing fluid, or both comprising a radiation susceptible material, positioning a logging tool adjacent at least one portion of the formation fracture after disposing the radiation susceptible material in the formation fracture, measuring the gamma-radiation emitted from the at least one portion of the formation fracture using the first detector apparatus, positioning the neutron emitter adjacent the at least one portion, irradiating the at least one portion of the formation fracture, positioning the second detector apparatus adjacent the at least one portion of the formation fracture, measuring the gamma-radiation emitted from any irradiated radiation susceptible material of the at least first portion of the formation fracture and subtracting the gamma-radiation emitted from the at least one portion of the formation fracture from the gamma-radiation emitted from the irradiated radiation susceptible material of the at least one portion of the formation fracture. The radiation susceptible material is non-radioactive prior to irradiation. The above steps are performed in a single logging pass. The logging tool comprises a first detector apparatus, a neutron emitter, and a second detector apparatus in the formation fracture.

Disclosed herein is one embodiment of a proppant including a substrate and a coating disposed on the substrate, wherein at least one of the substrate, the coating, or both, comprise one or more radiation susceptible materials selected from the group consisting of a halogen-containing material, a lanthanide series material, and combinations thereof, and wherein the one or more radiation susceptible materials comprise a particle size or thickness of less than 20 micrometer (µm, or microns), and is non-radioactive until bombarded by neutrons.

Disclosed herein is one embodiment of a proppant including a substrate and a coating disposed on the substrate, wherein at least one of the substrate, the coating, or both, comprise one or more radiation susceptible materials selected from the group consisting of a vanadium, indium, halogen-containing material, a lanthanide series material, and combinations thereof, and wherein the one or more radiation susceptible materials comprise a particle size or thickness of less than 20 micrometer (µm, or microns), and is non-radioactive until bombarded by neutrons.

### DETAILED DESCRIPTION OF FIGURES

Figure 1 depicts one exemplary embodiment of a proppant comprising a solid core upon which is disposed an organic coating that comprises a radiation susceptible material;

Figure 2 depicts another exemplary embodiment of a proppant comprising a core made up of particulates upon which is disposed an organic coating that comprises a radiation susceptible material; and

Figure 3 depicts another exemplary embodiment of a proppant that comprises an organic material in which is dispersed a filler and a radiation susceptible material.

### DETAILED DESCRIPTION

It is to be noted that as used herein, the terms "first," "second," and the like do not denote any order or importance, but rather are used to distinguish one element from another, and the terms "the", "a" and "an" do not denote a limitation of quantity, but rather denote the presence of at least one of the referenced item. Furthermore, all ranges disclosed herein are inclusive of the endpoints and independently combinable.

Disclosed herein is a method for determining fracture geometry that uses environmentally friendly materials. These environmentally friendly materials are non-radioactive until bombarded by neutrons and will be referred to as radiation susceptible materials. In one embodiment, the method involves determining fracture geometry of a formation using target elements that comprise the radiation susceptible materials. The radiation susceptible materials have a short half-life, which advantageously permits them to be used in a formation while at the same time minimizing any adverse environmental impact, either from handling or having the proppant flow back out of the well after the well is put back on production.

As noted above, radiation susceptible materials as defined herein are those that become radioactive upon bombardment by neutrons. The radiation susceptible materials may advantageously be disposed in a treatment fluid, such as a fracturing fluid, or may form part or all of a proppant which is disposed in a treatment fluid. The proppant may include the radiation susceptible materials in a coating disposed on a proppant and/or as a part or a whole of a core, i.e., the substrate, of the proppant itself.

The treatment fluid and/or the proppant that comprises the radiation susceptible material can be used during various wellbore treatment processes. The treatment fluid and/or the proppants that comprise the radiation susceptible materials may be injected into the wellbore during a production process, such as into a fracture during a hydraulic fracturing treatment or in a post-fracture process.

After being injected into the wellbore, the radiation susceptible materials are irradiated with neutrons from a neutron source. Gamma-radiation or neutrons emitted from the radiation susceptible materials are detected by a logging tool. Since the radiation susceptible materials have a short half-life, these materials become radioactive for only a brief period of time. The location of the gamma-radiation is used to determine the placement of the radiation susceptible materials in a fracture and is also used to determine the fracture geometry. In one embodiment, the location of the radiation susceptible materials is advantageously used to determine the fracture height.

The present method is advantageous in that background radiation acquired during the activation of the radiation susceptible materials can be collected in a single-pass and subtracted from the peak energy radiation. All other commercially available processes generally use two or more logging passes to determine the fracture geometry of the fractured formation.

The acquired background radiation generally comprises multiple contributions from a number of sources. A first contribution can generally be acquired from naturally occurring radioactive elements such as uranium, potassium, and/or thorium. Over time, fine-grained formations can trap minerals and fluids containing these naturally radioactive elements. When the radiation susceptible materials in the formation are activated by neutrons, these naturally occurring radioactive materials will also emit radiation, which is acquired as background radiation.

A second contribution to the background is acquired from radioactive materials that were previously placed in the formation in order to determine fracture height. This second contribution is therefore derived from radioactive tracers that were placed in the formation in previous attempts that were made to determine the fracture geometry. A third contribution to the background is that induced by neutron radiation being presently used to activate the radiation susceptible materials. This radiation emanates mainly from aluminum and silicon present in the formation and/or the proppant. Background radiation from iron/manganese used in the wellbore casing may also be a part of this third contribution.

It is desirable to remove all traces of background radiation from the peak energy radiation prior to calculation of fracture geometry. In one embodiment, the peak energy radiation measurements as well as background radiation measurements are made in a single-pass movement of the logging tool and the background radiation measurements are subtracted from the peak energy radiation measurements in the single pass. In the single-pass process, the movement of the logging tool may either be in a continuous mode or in the form of periodic (timed stationary) stops that allow the neutron source to irradiate a particular area (position or point) along the wellbore. The single-pass process may be used in single and multiple step vertical drilling techniques as well as horizontal drilling techniques.

In one embodiment, the logging tool may have at least a first detector apparatus and a second detector apparatus disposed vertically along the tool from the neutron emitter. In one example, the first detector apparatus is located above the neutron emitter and the second detector apparatus is located below the neutron emitter. The opposite configuration of detector apparatus locations may also be used based on the needs of the logging process and wellbore formation. Each of the first and second detector apparatus may each respectively comprise one or more separate detectors.

In one embodiment of an operation process, the logging tool is moved along the wellbore in a single-pass process. In the single-pass process, one or more portions (areas) or positions along the wellbore may be first exposed to the first detector apparatus to collect the necessary pre-irradiation or background data for a first period of time. The tool is then moved and the source is positioned adjacent the area along the wellbore where the first detector apparatus had collected the pre-irradiation or background data. The portion, or area, of the formation is then irradiated by the neutron source for a second period of time. After processing by the neutron source of the surrounding formation of the wellbore for the second period of time, the tool is moved again so that the second detector is positioned adjacent the area where the first detector and source had performed the pre-irradiation or background data collection and irradiation process. Data for the irradiated area is then collected for a third period of time. The third period of time may be approximately equal or equal to that time that the first detector had been stationary at the area. This three step process may be repeated until an interval area of interest in the surrounding formation has been examined. The logging process may begin at the top or the bottom of the wellbore section to be processed. Alternatively, the logging process may further include logging the wellbore as the tool is lowered in the section of interest for a bottom up start process.

The three step process may be performed in a periodic movement mode or a continuous movement mode. The periodic movement mode provides for distinct stoppage of the tool during one or more steps of the three step process. The overall average logging speed for the periodic movement mode from 1.016 cm/sec (2 feet per minute,ft/min) to 3.032 cm/sec(4 ft/min). In a continuous mode, the logging tool is kept in constant motion and the average logging speed for the wellbore, for example, may be from 1.016 cm/sec (2 feet per minute,ft/min) to 3.032 cm/sec(4 ft/min).

During the single-pass process through the wellbore formation, the first and second detector apparatus may collect data during the same period of time at different areas or positions along the wellbore. For example, the first detector apparatus may be collecting data at a first area, while the neutron emitted is irradiating a second area already processed by the first detector, and the second detector apparatus is collecting information at a third area, which had already irradiated by the emitter.

The initial pre-irradiation or background data collection, the irradiation exposure, and the irradiated material data collection may occur using the same time period for the periodic process. The same time period for each process step may be from 2 to 10 minutes, such as from 2 to 8 minutes, for example, 3.5 minutes.

Alternatively, based on the material and area to be irradiated, as well as the half-life time period of any radiation susceptible materials, the individual steps may be performed with different time periods. For example, a radiation susceptible material having a short half-life may result in a more rapid process sequence on one or more of the steps. In processing having different time periods for one or more of the above steps, the individual time period for the initial pre-irradiation or background data collection may be from 1 to 10 minutes, such as from 2 to 8 minutes. The individual time period for the irradiation exposure may be from 1 to 10 minutes, such as from 2 to 8 minutes. The individual time period for the initial irradiated material data collection may be from 1 to 10 minutes, such as from 2 to 8 minutes.

Alternatively, the logging tool may have a design of two or more emitters and each emitter is disposed between detector apparatus. For example, the tool may have a configuration of a first detector apparatus, a first neutron emitter, a second detector apparatus, a second neutron emitter, and then a third detector apparatus. Such a design may be advantageous for detecting radiation susceptible material emission of materials having a short half-life, such as less than 10 seconds, or to more accurately detect an emission signature from the radiation susceptible materials.

The detector apparatus may be a suitable spectral gamma-ray tool or sonde, which may be utilized to measure the gamma-radiation obtained from the radiation susceptible material after it is bombarded by neutrons. At least a portion of the tool, for example, at least the gamma-ray detector, is placed within the well to provide the desired log. The tool can be such as to generate the desired ratios down hole, or the gamma-ray spectra can be transmitted to the surface and the ratios determined from the spectral data. Either a low resolution detector, such as a NaI(Tl) or equivalent detector, or a high resolution detector, such as an intrinsic germanium, Ge(Li) or equivalent detector, may be used. Since it is desirable to obtain a precise measurement of the peak area or areas a high-resolution instrument is generally used. Logs can be generated either in a continuous, moving tool mode, or in a periodic mode (step-wise or temporary stationary mode) in which the tool is stopped at selected locations in the wellbore formation.

A collimator can be used on the detector if desired. In one embodiment, a rotating collimator is used to measure fracture orientation. Such collimators tend to increase the sensitivity of the measurement since such devices reduce the number of gamma rays entering the detector from locations up or down the borehole, i.e., gamma rays from proppant that is behind the casing but is above or below the current location of the detector. In one embodiment, a detector without a collimator can be used.

Examples of suitable devices that may be used for performing this process are disclosed in US 2010/0066560A1 and US 7,450,053, which are incorporated herein by reference to the extent not inconsistent with the claim aspects and the description herein.

When a proppant and/or treatment fluid comprises a radiation susceptible material, it is said to be tagged with the radiation susceptible material. The term "tagging" as used herein implies that the proppant and/or the treatment fluid comprise radiation susceptible materials. Thus, when a coating disposed on a substrate comprises radiation susceptible materials, the proppant is said to be tagged with a radiation susceptible material. The tagging of the proppants and/or the treatment fluid with a radiation susceptible material permits photo-peak to photo-peak ratios to be generated upon activation of the radiation susceptible material. The photo-peak to photo-peak ratios provide measurements of the vertical height of a proppant filled fracture.

As described herein, the radiation susceptible materials can be disposed in a proppant that is introduced into the wellbore formation, such as in a process to form and prop open a fracture. In one embodiment, the proppant can comprise a substrate upon which is disposed a coating comprising the radiation susceptible material. In another embodiment, the substrate can comprise the radiation susceptible material. In another embodiment, both the substrate and coating may comprise a radiation susceptible material.

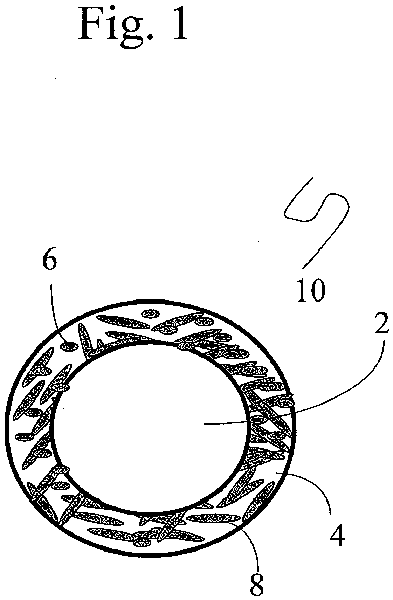

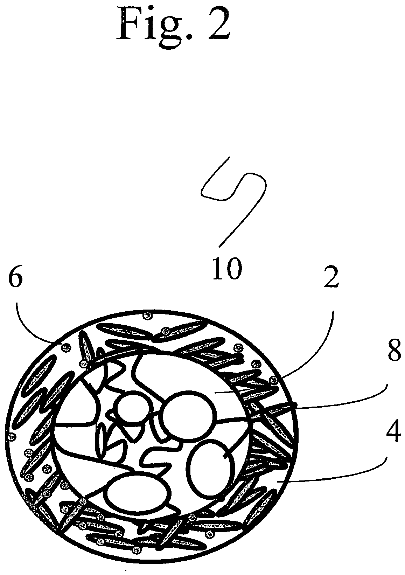

With reference now to Figure 1 or Figure 2, one exemplary embodiment of a proppant 10 comprises a substrate 2 upon which is disposed an optional coating 4. The optional coating 4 may be a continuous coating or a partial coating on the substrate. The optional coating 4 can comprise an organic material, an inorganic material including a metal, and combinations thereof. The optional coating may be partially formed of the radiation susceptible material 6. Alternatively, the optional coating may be free of the radiation susceptible material or may be completely formed from the radiation susceptible material. The optional coating 4 can be an uncured, partially cured, or fully cured organic material prior to use in a subterranean formation. This curing can occur either inside and/or outside the subterranean fracture. The optional coating 4 can optionally comprise particulate fillers or fibrous fillers 8 if desired. The particulate fillers or fibrous fillers 8 may also comprises in part or in whole, the one or more radiation susceptible materials as described herein.

When the radiation susceptible material comprises a portion of the coating, the radiation susceptible materials in whatever form may be used in amounts of up to 55 wt.%, based on the total weight of the proppant. Alternatively, when radiation susceptible materials are used in the coating, the radiation susceptible materials in whatever form may be used in amounts of up to 100 wt.%, based on the total weight of the coating. The coating may also be a radiation susceptible material free coating when the substrate comprises at least a radiation susceptible material.

Additionally, the coating may comprise two or more separate coating layers disposed one on top of the other or combined to form a single coating. Each coating layer may be continuous or non-continuous and each layer may contain a radiation susceptible material. For example, one of the coatings may be an organic coating, an inorganic coating, or both, free of the radiation susceptible material, and a second coating containing the radiation susceptible material. For example, the coating may comprise a partial coating of a thermosetting resin and a partial coating of a radiation susceptible material, which, when combined, could form a continuous or non-continuous coating. The radiation susceptible material can be the entire coating, a partial coating or can be dispersed in/within/embedded in a coating as a sort of filler.

The coating formed on the substrate may be continuous or non-continuous over the surface of the substrate. The coating may be formed on the substrate at an average thickness from 0.01 µm to 1000 µm, such as from 0.5 µm to 20 µm, for example, 1 µm. For coatings comprising inorganic materials, such as an elemental metal, the coating may be formed on the substrate by a chemical vapor deposition process, an electrochemical deposition process, an electrostatic deposition process, and combinations thereof, among other suitable deposition processes. A continuous or non-continuous underlayer may be formed prior to the coating, for example a seed layer for deposition of a metal coating.

The proppant 10 of Figures 1 and 2 comprises a substrate 2 that may comprise a single particle or an agglomerate of a plurality of particles. The single particle substrate may be a solid particle, including porous structures, or a hollow particle structure, such as a hollow bead or sphere. The single particle substrate may comprise in part or in whole, the radiation susceptible materials described herein. The agglomerate (or aggregate) may comprise particles having one or more different materials, and each particle, may comprise none, in part, or in whole, the radiation susceptible materials described herein. For example, the aggregate may be a combination of radiation susceptible material-containing particles, and other particles, such as ceramic material particles free of radiation susceptible materials.

The substrate can be present in the proppant in an amount of 10 to 90 weight percent (wt%), based on the total weight of the proppant. In one embodiment, the substrate is present in an amount of 20 to 80 wt%, based on the total weight of the proppant. In another embodiment, the substrate is present in the reactive solution in an amount of 30 to 75 wt%, based on the total weight of the proppant. In yet another embodiment, the substrate are present in an amount of 35 to 65 wt%, based on the total weight of the proppant.

The substrate 2 can comprise an organic material, an inorganic material including a metal, and combinations thereof. The organic material may be a binder or polymeric material described herein. The organic material may further comprise a radiation susceptible material. For example, a thermosetting resin or thermoplastic forming the substrate may further comprise the radiation susceptible material in an elemental form that is incorporated into the backbone of the polymer or present as side/pendant groups along the main chain of the polymer.

The inorganic material forming the substrate may be a metal. Examples of metals that can be used in the substrate 2 include elemental metal, metal alloys, and metal composites of the radiation susceptible materials described herein. When radiation susceptible materials are used in the substrate, the radiation susceptible materials may be used in amounts of up to 100 wt%, based on the total weight of the proppant, if no coating is used or if a coating of a radiation susceptible material is used with the radiation susceptible substrate.

While the radiation susceptible materials may be used in the substrate and/or coating of the proppant in amounts of up to 100 wt%, as described above, the radiation susceptible materials may comprise lesser amounts in the proppants. In one embodiment, the radiation susceptible materials may be used in amounts from up to 55 wt%, such as from 0.1 wt% to 5 wt%, for example, 3 wt%, based on the total weight of the proppant. The radiation susceptible materials can be used in amounts of as low as 0.01 wt%, based on the total weight of the proppant. Alternatively, the radiation susceptible materials may be used in the substrate and/or coating of the proppant in amounts of up to 25 wt%, up to 15 wt%, or up to 5 wt%, based on the weight of the proppant.

In another embodiment, when radiation susceptible materials are utilized in the proppant and/or the treatment fluid, radiation susceptible materials may be used in amounts up to 30 wt% as radiation susceptible material metal, such as from 0.01 to 5 wt%, including from 0.05 to 2 wt%, and for example, from 0.1 to 1 wt %, based on the total weight of the proppant and/or fracturing fluid.

Further, examples of metals that can be used in the substrates are shape memory alloys. Shape memory alloys exhibit a "shape memory effect". The shape memory effect permits a reversible transformation between two crystalline states i.e., a martensitic state to an austenitic state and vice versa. Generally, in the low temperature, or martensitic state, shape memory alloys can be plastically deformed and upon exposure to some higher temperature will transform to an austenitic state, thereby returning to their shape prior to the deformation.

A suitable example of a shape memory alloy is a nickel titanium alloy such as Nitinol^{®} alloy. It is desirable for the shape memory alloys to be foamed. In one embodiment, a substrate manufactured from a shape memory alloy can be a solid prior to introduction into the fracture, but can expand into a foam after introduction into the fracture, which is generally at a higher temperature than the temperature above ground. This expansion will permit better conductivity of oil and gas from the fracture.

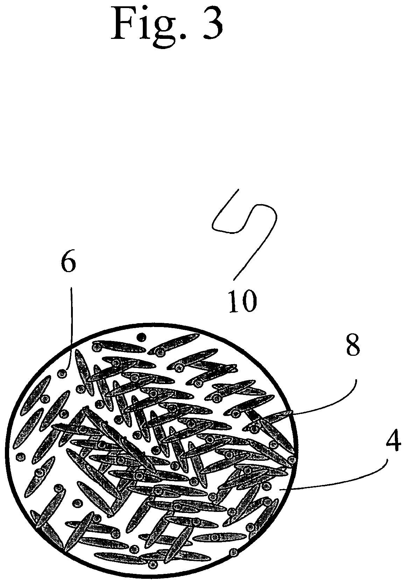

In one embodiment as depicted in the Figure 3, the substrate can comprise a composite of inorganic and organic materials as described herein. Such a substrate is termed a composite substrate. The composite substrate can comprise a combination of inorganic and organic materials. The organic materials can also be chemically bonded to the inorganic materials. Chemical bonding comprises covalent bonding, hydrogen bonding, ionic bonding, or combinations thereof. An example of a suitable reaction between an organic and an inorganic material that involves covalent bonding is a sol-gel reaction. The chemical bonding between the organic and inorganic materials can result in substrates that are nanocomposites. While not shown, composite substrates can be optionally coated with the organic coatings and/or the inorganic coatings described above.

In one embodiment, the composite substrate can also comprise radiation susceptible materials. For example, the radiation susceptible material is introduced during the manufacture of the substrate, such as in the manufacture of a ceramic substrate. In another embodiment, when the composite substrate is coated with an organic coating and/or an inorganic coating, both the composite substrate and the coating disposed thereon can comprise radiation susceptible materials.

In one embodiment, the composite substrate can comprise radiation susceptible materials in an amount of up to 35 wt%, based on the total weight of the proppant. An exemplary amount of the radiation susceptible materials is 5 wt%, based on the total weight of the proppant.

Examples of inorganic materials that can be used in the substrate are inorganic oxides, inorganic carbides, inorganic nitrides, inorganic hydroxides, inorganic oxides having hydroxide coatings, inorganic carbonitrides, inorganic oxynitrides, inorganic borides, inorganic borocarbides, or the like, or a combination comprising at least one of the foregoing inorganic materials. Examples of suitable inorganic materials/metal composites are metal oxides, metal carbides, metal nitrides, metal hydroxides, metal oxides having hydroxide coatings, metal carbonitrides, metal oxynitrides, metal borides, metal borocarbides, or the like, or a combination comprising at least one of the foregoing inorganic materials. Metals used in the foregoing inorganic materials can be transition metals, alkali metals, alkaline earth metals, rare earth metals, or the like, or a combination comprising at least one of the foregoing metals. Such metals may also be the elemental metal or metal alloys of the radiation susceptible materials described herein.

Examples of suitable inorganic oxides that are synthetically produced include silica (SiO₂) alumina (Al₂O₃), titania (TiO₂), zirconia (ZrO₂), ceria (CeO₂), manganese oxide (MnO₂), zinc oxide (ZnO), iron oxides (e.g., FeO, a-Fe₂O₃, γ-Fe₂O₃, Fe₃O₄, or the like), calcium oxide (CaO), manganese dioxide (MnO₂ and Mn₃O₄), or combinations comprising at least one of the foregoing inorganic oxides. Examples of suitable synthetically produced inorganic carbides include silicon carbide (SiC), titanium carbide (TiC), tantalum carbide (TaC), tungsten carbide (WC), hafnium carbide (HfC), or the like, or a combination comprising at least one of the foregoing carbides. Examples of suitable synthetically produced nitrides include silicon nitrides (Si₃N₄), titanium nitride (TiN), or the like, or a combination comprising at least one of the foregoing. Exemplary inorganic substrates are those that comprise naturally occurring or synthetically prepared silica and/or alumina.

Examples of suitable naturally occurring inorganic materials that can be used in the substrate are silica (sand), aeschynite (rare earth yttrium titanium niobium oxide hydroxide), anatase (titanium oxide), bindheimite (lead antimony oxide hydroxide), bixbyite (manganese iron oxide), brookite (titanium oxide), chrysoberyl (beryllium aluminum oxide), columbite (iron manganese niobium tantalum oxide), corundum (aluminum oxide), cuprite (copper oxide), euxenite (rare earth yttrium niobium tantalum titanium oxide), fergusonite (rare earth iron titanium oxide), hausmannite (manganese oxide), hematite (iron oxide), ilmenite (iron titanium oxide), perovskite (calcium titanium oxide), periclase (magnesium oxide), polycrase (rare earth yttrium titanium niobium tantalum oxide), pseudobrookite (iron titanium oxide), members of the pyrochlore group such as, for example, betafite (rare earths calcium sodium uranium titanium niobium tantalum oxide hydroxide), microlite (calcium sodium tantalum oxide hydroxide fluoride), pyrochlore (sodium calcium niobium oxide hydroxide fluoride), or the like, or a combination comprising at least one of the foregoing pyrochlore group members; ramsdellite (manganese oxide), romanechite (hydrated barium manganese oxide), members of the rutile group, such as, for example, cassiterite (tin oxide), plattnerite (lead oxide), pyrolusite (manganese oxide), rutile (titanium oxide), stishovite (silicon oxide), or the like, or a combination comprising at least one of the foregoing rutile group members; samarskite-(Y) (rare earth yttrium iron titanium oxide), senarmontite (antimony oxide), members of the spinel group such as chromite (iron chromium oxide), franklinite (zinc manganese iron oxide), gahnite (zinc aluminum oxide), magnesiochromite (magnesium chromium oxide), magnetite (iron oxide), and spinel (magnesium aluminum oxide), or the like, or a combination comprising at least one of the foregoing spinel group members; taaffeite (beryllium magnesium aluminum oxide), tantalite (iron manganese tantalum niobium oxide), tapiolite (iron manganese tantalum niobium oxide), uraninite (uranium oxide), valentinite (antimony oxide), zincite (zinc manganese oxide), hydroxides, such as, for example, brucite (magnesium hydroxide), gibbsite (aluminum hydroxide), goethite (iron oxide hydroxide), limonite (hydrated iron oxide hydroxide), manganite (manganese oxide hydroxide), psilomelane (barium manganese oxide hydroxide), romeite (calcium sodium iron manganese antimony titanium oxide hydroxide), stetefeldtite (silver antimony oxide hydroxide), stibiconite (antimony oxide hydroxide), or the like, or a combination comprising at least one of the foregoing naturally occurring inorganic materials.

Naturally occurring organic and inorganic materials that are subsequently modified can also be used as the substrate. Suitable examples of organic and inorganic materials that are modified and used in the substrate are exfoliated clays (e.g., expanded vermiculite), exfoliated graphite, blown glass or silica, hollow glass spheres, foamed glass spheres, cenospheres, foamed slag, sintered bauxite, sintered alumina, or the like, or a combination comprising one of the foregoing organic and inorganic materials. Exemplary inorganic substrates may be derived from sand, milled glass beads, sintered bauxite, sintered alumina, naturally occurring mineral fibers, such as zircon and mullite, or the like, or a combination comprising one of the naturally occurring inorganic substrates. Hollow glass spheres can be commercially obtained from Diversified Industries Ltd.

The organic materials that are used in the substrate can be thermoplastic polymers, thermosetting polymers, or a combination comprising a thermosetting polymer and a thermoplastic polymer. Examples of suitable organic materials that can be used as the substrate are polymer precursors (e.g., low molecular weight species such as monomers, dimers, trimers, or the like), oligomers, polymers, copolymers such as block copolymers, star block copolymers, terpolymers, random copolymers, alternating copolymers, graft copolymers, or the like; dendrimers, ionomers, or the like, or a combination comprising at least one of the foregoing. When the substrate comprises a thermosetting polymer, it is desirable for the organic materials to undergo curing (crosslinking) upon the application of either thermal energy, electromagnetic radiation, or a combination comprising at least one of the foregoing. Initiators may be used to induce the curing. Other additives that promote or control curing such as accelerators, inhibitors, or the like, can also be used.

Examples of suitable thermosetting polymers for use in the substrate are epoxies, acrylate resins, methacrylate resins, phenol-formaldehydes, epoxy-modified novolacs, furans, urea-aldehydes, melamine-aldehydes, polyester resins, alkyd resins, phenol formaldehyde novolacs, phenol formaldehyde resoles, phenol-aldehydes, resole and novolac resins, epoxy modified phenolics, polyacetals, polysiloxanes, polyurethanes, or the like, or a combination comprising at least one of the foregoing thermosetting polymers.

Epoxy-modified novolacs are disclosed by U.S. Patent No. 4,923,714 to Gibb et al. incorporated herein by reference. The phenolic portion can comprise a phenolic novolac polymer; a phenolic resole polymer; a combination of a phenolic novolac polymer and a phenolic resole polymer; a cured combination of phenolic/furan or a furan resin to form a precured resin (as disclosed by US 4,694,905 to Armbruster incorporated herein by reference); or a curable furan/phenolic resin system curable in the presence of a strong acid to form a curable resin (as disclosed by US 4,785,884 to Armbruster). The phenolics of the above-mentioned novolac or resole polymers may be phenol moieties or bis-phenol moieties.

The thermosets can be cold setting resins. Cold setting resins are those that can react at room temperature without the use of additional heat. Cold set resins generally cure at a temperature less than 65°C. Thus, for example, a thermoset that cures at 80°C is not a cold setting resin. Examples of suitable cold setting resins include epoxies cured with an amine when used alone or with a polyurethane, polyurethanes, alkaline modified resoles set by esters (e.g., ALPHASET® and BETASET®), furans, e.g., furfuryl alcohol-formaldehyde, urea-formaldehyde, and free methylol-containing melamines set with acid. For the purposes of this description, a cold set resin is any resin that can normally be cured at room temperature. ALPHASET® and BETASET® resins are ester cured phenolics.

Urethanes are disclosed by US 5, 733, 952 to Geoffrey. Melamine resins are disclosed by US 5,952,440, 5,916,966, and 5,296,584. ALPHASET resins are disclosed by US 4,426,467 and Re. 32,812 (which is a reissue of US 4,474,904) all of which are incorporated herein by reference.

Modified resoles are disclosed by US 5,218,038, incorporated herein by reference in its entirety. Such modified resoles are prepared by reacting aldehyde with a blend of non-substituted phenol and at least one phenolic material selected from the group consisting of arylphenol, alkylphenol, alkoxyphenol, and aryloxyphenol. Modified resoles include alkoxy modified resoles. An exemplary alkoxy modified resole is a methoxy modified resoles. An exemplary phenolic resole is the modified orthobenzylic ether-containing resole prepared by the reaction of a phenol and an aldehyde in the presence of an aliphatic hydroxy compound containing two or more hydroxy groups per molecule. In one exemplary modification of the process, the reaction is also carried out in the presence of a monohydric alcohol.

Examples of suitable thermoplastic polymers that can be used in the substrate are polyolefins, polyacrylics, polycarbonates, polyalkyds, polystyrenes, polyesters, polyamides, polyaramides, polyamideimides, polyarylates, polyarylsulfones, polyethersulfones, polyphenylene sulfides, polysulfones, polyimides, polyetherimides, polytetrafluoroethylenes, polyetherketones, polyether etherketones, polyether ketone ketones, polybenzoxazoles, polyoxadiazoles, polybenzothiazinophenothiazines, polybenzothiazoles, polypyrazinoquinoxalines, polypyromellitimides, polyquinoxalines, polybenzimidazoles, polyoxindoles, polyoxoisoindolines, polydioxoisoindolines, polytriazines, polypyridazines, polypiperazines, polypyridines, polypiperidines, polytriazoles, polypyrazoles, polycarboranes, polyoxabicyclononanes, polydibenzofurans, polyphthalides, polyacetals, polyanhydrides, polyvinyl ethers, polyvinyl thioethers, polyvinyl alcohols, polyvinyl ketones, polyvinyl halides, polyvinyl nitriles, polyvinyl esters, polysulfonates, polysulfides, polythioesters, polysulfones, polysulfonamides, polyureas, polyphosphazenes, polysilazanes, polysiloxanes, phenolics, epoxies, or combinations comprising at least one of the foregoing thermoplastic materials.

Naturally occurring organic substrates are ground or crushed nut shells, ground or crushed seed shells, ground or crushed fruit pits, processed wood, ground or crushed animal bones, or the like, or a combination comprising at least one of the naturally occurring organic substrates. Examples of suitable ground or crushed shells are shells of nuts such as walnut, pecan, almond, ivory nut, brazil nut, ground nut (peanuts), pine nut, cashew nut, sunflower seed, Filbert nuts (hazel nuts), macadamia nuts, soy nuts, pistachio nuts, pumpkin seed, or the like, or a combination comprising at least one of the foregoing nuts. Examples of suitable ground or crushed seed shells (including fruit pits) are seeds of fruits such as plum, peach, cherry, apricot, olive, mango, jackfruit, guava, custard apples, pomegranates, watermelon, ground or crushed seed shells of other plants such as maize (e.g., corn cobs or corn kernels), wheat, rice, jowar, or the like, or a combination comprising one of the foregoing processed wood materials such as, for example, those derived from woods such as oak, hickory, walnut, poplar, mahogany, including such woods that have been processed by grinding, chipping, or other form of particalization. An exemplary naturally occurring substrate is a ground olive pit.

The substrates can have any desired shape such as spherical, ellipsoidal, cubical, polygonal, or the like. Exemplary substrates are spherical in shape. It is generally desirable for the substrates to be spherical in shape. The substrates can have average particle sizes of 1 micrometer (µm, or microns) to 1200 micrometers. In one embodiment, the substrates can have average particle sizes of 100 micrometers to 1000 micrometers. In another embodiment, the substrates can have average particle sizes of 300 micrometers to 500 micrometers.

When a substrate is a porous substrate, it is envisioned that the substrate can comprise particles that are agglomerated to form the particulate substrate. In such a case, the individual particles that combine to form the substrate can have average particle sizes of 2 to 30 micrometers. In one embodiment, the particles that agglomerate to form the substrate may have average particle sizes of less than or equal to 28 micrometers. In another embodiment, the particles that agglomerate to form the substrate may have average particle sizes of less than or equal to 25 micrometers. In yet another embodiment, the particles that agglomerate to form the substrate may have average particle sizes of less than or equal to 20 micrometers. In yet another embodiment, the particles that agglomerate to form the substrate may have average particle sizes of less than or equal to 15 micrometers. Bimodal or higher particle size distributions may be used.

As noted above, the substrate may be solid (i.e., without any substantial porosity) and may further be porous. In general, a porous substrate permits for impregnation by an organic material, thereby imparting to the substrate an ability to flex and to absorb shock and stress without deforming. The porous substrate also allow impregnation by a radiation susceptible material either in an elemental form, a multiple component form, such as a salt, or as part of an organic material. The ability of a polymer to impregnate the substrate also minimizes the ability of the proppant to fracture, thereby reducing dust generation. By impregnating a porous inorganic substrate with an organic material, the density of the proppant can be adjusted to suit various fracture conditions.

In general, the substrate can have a porosity from 1% to 90%, such as greater than or equal to 20% and less than 90%, based on the total volume of the substrate. In one embodiment, the substrate can have a porosity from 20% to 40%, based on the total volume of the substrate.

Porous substrates generally have high surface areas. If the substrate is porous, it is desirable for the substrate to have a surface area of greater than or equal to 10 square meters per gram (m²/gm). In one embodiment, it is desirable for the substrate to have a surface area of greater than or equal to100 m²/gm. In another embodiment, it is desirable for the substrate to have a surface area of greater than or equal to 300 m²/gm. In yet another embodiment, it is desirable for the substrate to have a surface area of greater than or equal to 500 m²/gm. In yet another embodiment, it is desirable for the substrate to have a surface area of greater than or equal to 800 m²/gm.

The density of the substrate can be chosen depending upon the application for which the proppant is being used. It is desirable to choose substrates that can impart to the proppant an apparent density of 0.5 to 4 grams per cubic centimeter (g/cc). The apparent density is defined as the density of the entire proppant (i.e., the weight per unit volume of the entire material including voids inherent in the proppant).

As noted above, in the Figures 1 and 2, the substrate has disposed upon it a coating. The coating can be an organic coating, an inorganic coating, such as a metal coating, or a coating comprising at least one of the foregoing coatings and may further comprise the radiation susceptible material. Exemplary organic coatings can be derived from the thermoplastic and thermosetting polymers listed above.

The radiation susceptible materials are neutron-responsive so that it readily reacts to neutrons, such as by absorbing thermal neutrons to exhibit a relatively large atomic cross section. By such responsiveness to neutrons, the radiation susceptible material yields the characteristic gamma-radiation or neutron absorption, which is distinguishable from the characteristics of the materials in the surrounding formation. Preferred radiation susceptible materials are materials that more readily absorb neutrons to a greater or different extent than materials naturally occurring in a formation, and would radiate gamma-radiation and/or neutrons at different levels than materials naturally occurring in a formation. Preferred radiation susceptible materials also provide a sufficiently strong enough signal in a characteristic region of the spectrum or a "fingerprint" signal that is typical of the specific radiation susceptible material. These radiation susceptible materials are also initially non-radioactive so that they can be safely handled without fear or risk of radiation exposure or contamination at the surface of the well until after it is introduced into the system by which it is to be moved into the well.

Although the radiation susceptible material is initially non-radioactive, the isotope of the radiation susceptible material is one which either becomes radioactive, whereby the created radioactive isotope decays and emits gamma-radiation detectable by a suitable detector, or otherwise undergoes a nuclear or atomic reaction, such as by simply absorbing one or more neutrons to an extent greater than the materials of the surrounding formation. Such a reaction can occur in response to the external neutrons emitted from an accelerator. If the original substance is to react by forming a radioactive isotope, the radioactive isotope preferably has a known half-life so that prolonged irradiation by the accelerator is not needed for the reaction to occur and so that adequate detection time exists once the conversion has occurred. It is advantageous that the radiation susceptible material decays to a non- radioactive state shortly after the logging process is completed, thereby allowing the well to be brought back onto production without fear of producing radioactive material.

It is generally desirable for the period of measurable radiation to be of a length of time so that the material no longer emits radiation when the well starts producing hydrocarbons. It is also advantageous in that after the half-life of the radiation susceptible material has expired, the well can be re-logged as many times as desired by re-irradiating the radiation susceptible material.

In one embodiment, the radiation susceptible materials have a half-life of 1 second to less than or equal to 100 days. In another embodiment, the radiation susceptible materials have a half-life of 10 seconds to 50 minutes. In yet another embodiment, the radiation susceptible materials have a half-life of 12 seconds to less than or equal to 30 minutes. An exemplary half-life for a radiation susceptible material is from 12 seconds to 10 minutes. For example, isotopes of vanadium may have a half-life of 3.8 minutes and isotopes of indium may have a half-life of 14 seconds.

Examples of suitable radiation susceptible materials that may compose a portion of the proppant and/or the treatment fluid may be formed with one or more of the following materials. The lanthanide series of rare earth metals may include lanthanum, dysprosium, europium, lutetium, holmium, samarium, gadolinium, cerium, and combinations thereof may be used as radiation susceptible materials. Additionally, radiation susceptible materials may include Group IIA (Group 2) elements, such as calcium, magnesium, barium and strontium, Group VIA (Group 14) elements, such as selenium and tellurium, Group IB (Group 11) elements, such as copper, silver, and gold, Group IIB (Group 12) elements, such as zinc, Group IIIB (Group 3) elements, such as thallium, Group IVB (Group 4) elements, such as titanium and zirconium, Group VB (Group 5) elements, such as vanadium, niobium, and tantalum, Group VIB (Group 6) elements, such as tungsten and chromium, Group VIIB (Group 7) elements, such as manganese, and combinations thereof, may also be used. Other materials that may be used include, Group IIB (Group 12) elements, such as cadmium, Group VIIB (Group 7) elements, such as rhenium, Group VIIIB (Groups 8-10) elements, such as cobalt, rhodium, platinum, rubidium, and iridium, and combinations thereof. Combinations of the elements described above may also be used as the radiation susceptible materials. Preferred radiation susceptible materials include a halogen-containing material, dysprosium, barium, strontium, gold, zirconium, tantalum, and combinations thereof. Other preferred radiation susceptible materials include vanadium, indium, and combinations thereof. Preferred radiation susceptible materials include vanadium, indium, a halogen-containing material, dysprosium, barium, strontium, gold, zirconium, tantalum, and combinations thereof. Other preferred radiation susceptible materials include vanadium, indium, and combinations thereof.

In one embodiment, the radiation susceptible material may include a halogen-containing material, such as an elemental halogen, a fluorine-containing material, a bromine-containing material, a chlorine-containing material, an iodine-containing material, and combinations thereof. In one embodiment, the halogen containing materials may be non-salt organic materials. Examples of suitable halogen-containing materials include tetrabromobisphenol A (TBBPA), tribromophenol, decabromodiphenyl ether, hexabromocyclododecane, polytetrafluoroethylene (Teflon), polychlorotrifluoroethylene (Kel-F), 2-*iodo*-5,5-dihydroperfluorononane, iodophenol, and combinations thereof. The halogen material may be included in the substrate or included in the coating material. For example, the halogen material may be part of the polymer forming an organic polymeric coating or may be part of an organic material (binder) or ceramic material forming the substrate. The halogen material may form from 1 wt.% to 50 wt%, such as from 3 to 10 wt%, for example, from 5 wt% to 6 wt%, of the polymeric organic coating, binder material, or ceramic material.

The radiation susceptible materials may include one or more isotopes of the respective elements, for example, Br⁷⁹ and Br⁸¹ for bromine and Ir¹⁹¹ and Ir¹⁹³ for iridium. One source of isotope enriched materials are ISOTEC™ materials that may be used as radiation susceptible materials and are available from Sigma-Aldrich of St. Louis, Missouri. The preferred isotopes each have a half-life within the times as described herein for half-life of suitable radiation susceptible materials.

Materials excluded from the radiation susceptible materials described herein are Group IIIA (Group 13) elements of boron, aluminum, and gallium, and Group IVA (Group 14) elements of silicon and germanium. Thus, the proppant has a radiation susceptible material free of boron, aluminum, gallium, silicon, germanium, and combinations thereof. Additionally, the proppant may have a radiation susceptible material free of vanadium, indium, or both.

In one embodiment, the radiation susceptible materials used in the proppant are different materials than one or more of the elements or materials constituting a component of the substrate material. Thus, the radiation susceptible material may be free of one or more elements or materials constituting a component of the substrate material. For example, if the substrate material is zirconium oxide, the radiation susceptible material may be a material different than zirconium, oxygen, or zirconium oxide, or alternatively stated, the radiation susceptible material may be free of zirconium, oxygen, or zirconium oxide. In such embodiments, the radiation susceptible material may be disposed in the substrate, the coating, or both.

The radiation susceptible material may comprise elemental metals, metal alloys, metal halides, salts, composites, suspensions, and combinations thereof. Examples of suitable metal salts include sulfates, sulfides, and combinations thereof. The radiation susceptible materials may also be a metal composite including metal carbides, metal oxides, metal nitrides, metal carbon nitride, metal oxynitrides, and combinations thereof.

The radiation susceptible materials may be in all available forms including powders/particles, flakes, agglomerates, and combinations thereof. In one embodiment, the radiation susceptible material may be in the form of a particle having a particle size or diameter from 1 to 20 microns (µm), such as from 1 to 15 microns or from 1 to 10 microns, for example, from 2 to 5 microns. The particle sizes allow for the use of the radiation susceptible materials in a polymeric coating on a substrate or used in forming an agglomerate substrate. Alternatively, the radiation susceptible material may itself be in the form of a coating on substrate, which may be deposited as a continuous or non-continuous layer at a thickness from 1 to 20 microns (µm).

The radiation susceptible material may be selected to provide a differential measurable signal from the naturally occurring materials. As such, one or more radiation susceptible materials may be selected to provide to a half-life time, gamma-radiation emission, gamma energy (MeV), gamma-radiation wavelength, gamma-radiation intensity, (single or multiple radiation susceptible materials) signal pattern, other signal characteristic, and combinations thereof, that is different than any radiation generated from the formation (background or naturally-occurring) material of the wellbore.

In one embodiment, preferred radiation susceptible materials are selected, alone or in combination, to be a material or materials that are not a characteristic (non-characteristic) element or elements of a formation. For example, if a formation has aluminum as a characteristic element, a radiation susceptible materials having gamma emission distinguishable from aluminum may be selected. Alternatively, as the process described herein may also distinguish the amounts of radiation susceptible materials before and after irradiation by the extent of the measured gamma radiation emission, in one embodiment, the radiation susceptible material may also comprise a characteristic element or elements of a formation. For example, a proppant comprising a characteristic element or elements of a formation will provide a different signal, such as greater gamma radiation emission after irradiation, than as measured for the initial amount of characteristic element or elements of the formation in the background radiation measurement step.

In one embodiment, two or more radiation susceptible materials may be disposed on or comprise the same proppant. For example, the two or more radiation susceptible materials may be disposed in the coating, may form a portion or all of the substrate, or may include a first radiation susceptible material in the coating and a second radiation susceptible material comprising a portion of all of the substrate.

It is believed that a configuration of two or more radiation susceptible materials would allow better differentiation from the natural environment by having two or more characteristic signals or signal patterns or provide for a unique signal or signal pattern distinguishable from the background radiation. For example, indium might be found in the wellbore, and if indium and vanadium are both disposed in a coating, the two radiation susceptible materials-containing proppant would be located wherever the characteristic gamma-ray signals for indium and vanadium in combination are detected.

The two or more radiation susceptible materials may be provided in different amounts and/or ratios to the same coating and/or same substrate, to a different coating and substrate, or to different proppants. For example, different amounts of radiation susceptible materials having similar signals may form a unique signal or signal pattern. Similarly, a strong emission signal may require less amount of material to be used to have a detectable signal than a second radiation susceptible material. Also, radiation susceptible materials, with different half-life periods may be used to produce a unique signal or signal-pattern over time. The different ratios can also help form a unique signal or signal pattern to help distinguish the proppant from the background radiation.

In another example, particles of a radiation susceptible material, such as vanadium, could be dispersed in a phenolic or epoxy polymer in which tetrabromobisphenol A has been incorporated in the polymer backbone or dispersed as a separate radiation susceptible material. The vanadium and bromine could both serve as radiation susceptible materials. Both radiation susceptible materials could be incorporated as organic materials. For example, particles of polytetrafluoroethylene could be dispersed in a bromine-containing epoxy or phenolic resin, with both the fluorine and bromine acting as radiation susceptible materials. Alternatively, particulate substrates could be coated with both polytetrafluoroethylene and a bromine-containing epoxy or phenolic resin, again, with both the F and Br serving as radiation susceptible materials.

In one embodiment, proppants comprising the radiation susceptible material can be mixed with proppants that are free from any radiation susceptible material prior to introduction into the fracture. The mixture of proppants comprising the radiation susceptible material with proppants that are free from any radiation susceptible material is termed a "proppant composition". A proppant composition may contain radiation susceptible materials in an amount of up to 55 wt.%, based on the total weight of the proppant composition. An exemplary amount of radiation susceptible materials in the proppant composition is 0.5 wt% to 10 wt% based on the total weight of the proppant composition.

In another embodiment, proppants comprising different radiation susceptible materials can be mixed. For example, a first proppant can comprise a first radiation susceptible material, while a second proppant can comprise a second radiation susceptible material. For example, the first proppant can include a certain vanadium containing compound, while the second proppants includes different vanadium containing compound or an indium containing compound.

In one example of the radiation susceptible materials, the radiation susceptible materials can comprise vanadium and/or indium or combinations comprising at least one of the foregoing radiation susceptible materials. Vanadium and indium are useful because they have very strong responses in their natural states. In one embodiment, the vanadium and/or indium metal particles are dispersed in the organic and/or inorganic material prior to coating the substrate. In another embodiment, salts of vanadium and/or indium can be dispersed in the organic and/or inorganic material prior to coating the substrate.

Exemplary vanadium salts that can be used as radiation susceptible materials are vanadyl sulfate, sodium or potassium orthovanadate, sodium or potassium metavanadate, chloride salts of vanadium, or the like, or a combination comprising at least one of the foregoing vanadium salts. Other compounds comprising vanadium can also be used. Examples of vanadium compounds that can be used are vanadium oxides, such as, for example, vanadium trioxide, vanadium pentoxide, or the like, or a combination comprising at least one of the foregoing oxides. Other examples of vanadium compounds, which can be used alone or in combination with each other, include vanadium metal, vanadium alloys such as vanadium/aluminum alloys, ferrovanadium, or a vanadium carbon nitride powder such as NITROVAN™ vanadium, which is commercially available from Stratcor, Inc., of Pittsburgh, Pennsylvania.

Exemplary indium salts are indium chloride, indium sulfate, or the like, or a combination comprising at least one of the foregoing indium salts. In one embodiment, salts of indium or vanadium can be dispersed in the proppant coating and can be reacted to form a metal after the proppant is introduced into the formation.

In a preferred embodiment, a vanadium compound may be used with the vanadium compound being a vanadium carbon nitride powder or NITROVAN vanadium. The powder may have a particle size of 1-15 microns (µm), preferably 1 to 10 microns and more preferably 2-5 microns. In another preferred embodiment, the vanadium compound is a vanadium carbon nitride powder or NITROVAN vanadium, of 65 wt% to 75 wt% as vanadium metal, which may be used at levels of 0.01 to 5 wt% as vanadium metal preferably 0.05 to 2 wt% and more preferably 0.1 to 1 wt%, based on the total weight of the proppant and/or fracturing fluid.

The radiation susceptible materials can be present in a treatment fluid. The treatment fluid is a fluid designed and prepared to resolve a specific wellbore or reservoir condition. Treatment fluids are typically prepared at the wellsite for a wide range of purposes, such as stimulation, isolation or control of reservoir gas or water. The treatment fluid may include, and is not limited to, a stimulation fluid, a surfactant containing fluid, and combination thereof, as well as any fluid capable of delivering the radiation susceptible material described herein, such as water or brine as examples. A stimulation fluid is a treatment fluid prepared for stimulation purposes, such as fracturing (also referred to as hydraulic fracturing). The stimulation fluids may be, for example, acid or solvent-based, such as hydrochloric acid. The stimulation fluid may be a fracturing fluid. A fracturing fluid is used with a stimulation treatment routinely performed on oil and gas wells to improve permeability in reservoirs to causing a vertical fracture to open. The proppants described herein may be mixed with the treatment fluid to keep the fracture open when the treatment is complete.

When the radiation susceptible material is present in the treatment fluid, it can be present in the form of suspended particles, emulsions, dispersions, dissolved in the treatment fluid, and combinations thereof. The suspended particles may be proppants as described herein. The radiation susceptible material may comprise part of the surfactant or any other polymeric material disposed in the treatment fluid.

The treatment fluid, such as a fracturing fluid, can comprise radiation susceptible materials in an amount of 0.01 wt% to 35 wt%, based on the total weight of the treatment fluid. In one embodiment, the treatment fluid, such as fracturing fluid, can comprise radiation susceptible materials in an amount of 2 wt% to 25 wt%, based on the total weight of the treatment fluid. In yet another embodiment, the treatment fluid can comprise radiation susceptible materials in an amount of 3 wt% to 15 wt%, based on the total weight of the treatment fluid. An exemplary amount of the radiation susceptible materials is 5 wt%, based on the total weight of the treatment fluid.

In one embodiment, the treatment fluid may comprise a non-reactive fluid or a reactive fluid. A non-reactive fluid is a fluid that is chemically inert or substantially chemically inert with the materials of the wellbore formation. As such, there are minimal or no chemical reactions between the fluid and the materials of the wellbore formation. The non-reactive fluids may involve a physical transformation of materials of the wellbore formation. Examples of non-reactive fluids include water, gelled water, slick water (water and chemicals to increase the fluid flow of water), oil, hydrocarbons, gelled hydrocarbons, such as diesel, and combinations thereof. The non-reactive fluids may be fluids (including foams) that are further energized with carbon dioxide or nitrogen.

A reactive fluid can include any material that chemically reacts with the formation materials. Examples of reactive fluids include an acid system, a gelled acid system, a caustic system, a delayed reaction system, water, brines (salt water), surfactant-containing solutions, and combinations thereof. The reactive fluids may be fluids (including foams) that are further energized with carbon dioxide or nitrogen. In one embodiment, the reactive fluid may be the same fluid as used in other processes, such as the reactive fluid being the same fluid used to create a fracture in the formation. Preferred reactive fluids would have reduced or no chemical reaction with the radiation susceptible materials.

Whether the fluid is reactive or non-reactive may further depend on the material of the formation and other operational parameters. For example, water is a non-reactive fluid as described above when the wellbore formation is a sandstone formation. In contrast, water may be a reactive fluid when the wellbore formation is a clay formation.

One reactive fluid is an acid system, which may include mineral acids. Mineral acids may be used to destabilize or remove materials from a wellbore formation, such as when materials are of a carbonate nature and are prone to acid dissolution. Hydrofluoric acid and mud acid can be used to destabilize or remove sandstones, clays and other silicate and aluminosilicate cementatious materials. The hydrofluoric acid may be in the form of a hydrofluoric acid precursor, such as ammonium bifluoride, and can be pumped with acid precursors, for example, esters, polylactic acid, and/or sodium bisulfate, among others. One example of an acid system may be a mixture of hydrofluoric acid and hydrochloric acid. In another example, a mixture of 12% HCl/3% HF or 8% HBF₄ (tetrafluoroboric acid or fluoroboric acid) may be used in potassic mineral sandstone to remove the near-wellbore damage in the sandstone formation. The example acidic treating fluid is used specifically to dissolve the damaging solid particles, generally clays originating from drilling mud or from the formation itself. Other systems include acid systems used in acid frac treatment techniques.

The reactive fluid may have various concentrations of different acids as described above. The acid concentration may be from 0.1 wt% to 55 wt% of the reactive fluid, such as from 5 wt% to 35 wt%. The acid systems may include gelled (viscous) or non-gelled acid mixtures.

One example of a caustic system is a system containing strong bases such as sodium hydroxide (NaOH). Caustic systems have previously been used to dissolve silicates, and can be used with the proppants and materials described herein to destabilize the cementation between particles. Another reaction fluid is a delayed reaction system, such as magnesium oxide (MgO), solid NaOH pellets, or alkaline glasses, which may remain in the fracture after pumping has finished and allowed to react. Additionally, the reactive systems can include various types of organic chelating agents, such as ethylenediaminetetraacetic acid (EDTA). If the formation materials are clays, then some simple brines (NaCl,) fresh water, or simple surfactants may be used as reactive fluids to destabilize the materials.

Additionally, the reactive fluids are designed to have the correct rheology and leak off characteristics in order for it to be pumpable, and for it to place the reactive materials sufficiently far from the wellbore. The basic techniques for this are essentially the same as are used in other fracturing operations. Such techniques are further disclosed in US 12/520,905, filed on November 2, 2009, which is incorporated herein by reference to the extent not inconsistent with the claim embodiments and description herein.

The reactive fluids may be used to carry and place proppant or pumped without proppant. When no proppant is included, the acid's reaction on the formation materials may form an irregular surface that will remain open even after the treatment has ended and the created fracture has tried to close. An example of the use of the reactive fluid may be in an acid frac treatment process. Preferred reactive fluids have composition that have reduced or no chemical reactions with the radiation susceptible materials as described herein.

In yet another embodiment, both the treatment fluid, such as a fracturing fluid, and the proppants contained in the treatment fluid can comprise the radiation susceptible materials. In one embodiment, the treatment fluid and the proppants can both contain the same radiation susceptible material or materials, or in the case of salt cations of the same radiation susceptible material or materials. For example, the treatment fluid can comprise dissolved vanadyl sulfate, while the proppants contained in the treatment fluid can comprise vanadium trioxide. Upon being subjected to neutrons, both the vanadyl sulfate and the vanadium trioxide can emit gamma-radiation that can be used to calculate the fracture geometry.

In yet another embodiment, the treatment fluid and the proppants contained in the treatment fluid can comprise different materials or cations. For example, the treatment fluid can comprise a first radiation susceptible material, while the proppants contained in the treatment fluid can comprise a second radiation susceptible material or one or more radiation susceptible material in the coatings and/or substrates of the proppants as described herein. For example, the treatment fluid can comprise a salt of a first radiation susceptible material, such as vanadyl sulfate, while the proppants can comprise a salt of a second radiation susceptible material as described herein. In a related embodiment, the treatment fluid can comprise a salt of a radiation susceptible material, while the proppant can comprise a radiation susceptible material that comprises metal particles. For example, the treatment fluid can comprise vanadyl sulfate while the proppant can comprise particles of a second radiation susceptible material as described herein.

When the treatment fluid and the proppants both contain radiation susceptible materials, the treatment fluid and proppants may present in different locations of the wellbore, without the presence of the other. For example, the proppants may be located in a fracture and the treatment fluid in both the fracture and in a portion of the wellbore separated from the fracture.

In one embodiment, in one method of determining fracture height, (tagged) proppants and/or a (tagged) treatment fluid having the radiation susceptible materials described herein, such as a fracturing fluid, are introduced into the formation. For example, the tagged proppants and/or tagged treatment fluid may comprise indium and/or vanadium. The tagged proppant and/or tagged treatment fluid are then bombarded with neutrons during a logging pass. A logging pass is one wherein the logging tool is introduced into the well and wherein a neutron bombardment of the formation fracture is initiated. Gamma ray spectroscopy is then performed on the irradiated formation materials including the tagged proppant and/or tagged treatment fluid to obtain gamma count rates both above and below the peak energies (also referred to as off-peak energies) coming from the radiation susceptible materials, such as vanadium and/or indium. Gamma count rates are measured at the peak energies for from the radiation susceptible materials, such as vanadium and/or indium. The off-peak measurements are used to remove a portion of background radiation from the peak energies.The background removal is accomplished using spectroscopy software routines.

Additional background radiation emanating from the presence of materials such as aluminum, silicon, iron, or the like, is also removed prior to obtaining the peak energies for the radiation susceptible materials, such as indium and/or vanadium, which is injected into the fracture. Materials such as aluminum, silicon, iron, or the like, are generally present in the formation and in the wellbore casing and also generate gamma-radiation due to the neutron bombardment. Removal (subtraction) of this contribution to background radiation along with the off-peak energy radiation generally leaves the peak energies of the injected radiation susceptible materials. These peak energies can be used to estimate the geometry of the fracture. In an exemplary embodiment, the peak energy positions of the injected radiation susceptible materials can be used to determine the fracture height.

In one method of estimating the radiation due to materials such as aluminum, silicon, iron, or the like, the formation fracture is irradiated with neutrons during a single logging pass. During this pass, gamma ray spectroscopy of the entire spectrum of energies is performed. After the logging pass, all of the radiation due to materials having a short half-life, such as that from the vanadium and/or indium, will die out, leaving behind radiation emanating from those elements that are naturally present in the fractured formation. Alternatively, the logging pass may be performed in stages or in a continuous manner where the time difference between the irradiation process and the second detection process is longer than the half-life of the deposited radiation susceptible materials.

In order to measure the fracture height in a single pass, it is desirable to obtain gamma ray measurements that cover the entire spectrum of energies of the gamma rays emitted by the radiation susceptible materials, such as vanadium and/or the indium, as well as other materials that are naturally present in the fractured formation. The radiation measurements are made by using a detector present in the logging tool. As noted above, measurements obtained at off-peak energies are subtracted from the measurements made at peak energies to remove the background radiation. This background radiation involves radiation signals that are obtained from the activation of nuclei that are generally present in formations such as aluminum, silicon, iron, or the like. It is to be noted that some radiation may also emanate from materials used in the wellbore casing and these are to be removed. These background radiations from materials present in the wellbore and formation is generated because of the exposure to neutrons in a manner similar to that coming from the radiation susceptible materials that are injected into the formation fracture. After the logging pass, the radiation emanating from the activation of the radiation susceptible materials will die out because of the short half life of these materials leaving the natural background radiation from materials such as aluminum, silicon, iron, or the like, present in the earth formations. This background radiation can then be measured and subtracted from the measured peak energies of the radiation susceptible materials to estimate the fracture height.

In another embodiment, in another method of determining fracture height, tagged proppants having differing densities can be introduced into the formation. Gravitational separation of the tagged proppants can then be used to determine the fracture geometry. The heavier tagged proppants will settle to the bottom of the fracture, while the lighter proppants will float to the top of the fracture. In one embodiment, the proppants having the higher densities can be tagged with a first radiation susceptible material, while the proppants having the lighter densities can be tagged with a second radiation susceptible material. Gamma-radiation signals obtained from the tagged proppants can then be used to determine the height and other geometrical features of the fracture. For example, if the denser proppants comprise vanadium and the lighter proppants comprise indium, then the gamma-radiation signals from the vanadium and those from the indium can be used to determine the height of the fracture.

In yet another embodiment, in another method of determining fracture height, tagged proppants that are capable of being oriented can be used to determine fracture height. The proppant can comprise an active material in addition to the radiation susceptible material, wherein the active material can be used to orient the proppant. The active material that promotes orientation in the proppant can be activated by an external activating signal such as, for example, radio signals, electrical fields, magnetic fields, ultrasonic signals, or the like. In one embodiment, the tagged proppant can comprise electrically conductive particles such as for example, conductive metal particles, carbon nanotubes, or the like, which permit the proppant to be realigned by an applied electrical field. Thus, after the tagged proppants are introduced into the formation, the active materials can be activated by the application of the appropriate external activating signal to promote reorientation. After the desired orientation is achieved, the tagged proppants are bombarded with neutrons to produce gamma-rays. The measured gamma-rays are correlated with the orientation to derive information the fracture geometry. When tagged proppants are capable of being oriented, the logging tool can comprise an apparatus that is capable of orienting the suspended particles as well as measuring the resulting orientation in the tagged particles.

This method is advantageous since it uses a single pass of the logging tool to determine the fracture height. After irradiation, the radiation susceptible material can be left downhole because of its extremely short half-life. This permits re-determining the fracture geometry after substantial intervals of time after the fracturing has occurred. For example, a determination of fracture geometry can be initially made as soon as the fracturing occurs. Since the radiation susceptible materials can be retained in the formation without any damage to the soil or underground water or to personnel above ground, another determination of fracture geometry can be made after an interval of several months to observe changes in the fracture.

Other methods generally require two or more passes of the logging tool to determine the fracture height. The present method is also advantageous in that it prevents contamination of the soil and underground water with radioactive materials. Since the radiation susceptible materials used in the present method have a short half-life, contamination of underground water streams and soil can be prevented. In addition, if flow back from the well occurs, then the risk of personnel being subjected to radiation is substantially reduced.

This method also avoids the use of radioactive tracers. The use of radioactive tracers may contaminate underground water streams and is environmentally hazardous. Other methods that use radioactive tracers must perform a background-logging pass to remove the natural gamma-radiation coming from the materials present in the formations. This background removal is most critical when either the injected radioactive material is dying out, and/or when this material was poorly positioned, and/or when this material was positioned deeply into the formation making it difficult to find.

In order to provide a better understanding of the present invention including representative advantages thereof, the following examples are offered. It is understood that the examples are for illustrative purposes and should not be regarded as limiting the scope of the invention to any specific materials or conditions.

### EXAMPLES

A pre-cured resin coating was developed by pre-mixing a solution of 70 grams of Oil Well Resin OWR-262E, which is a liquid phenol-formaldehyde resole resin, and (3.75 grams of 80%) or (6.0 grams of 50%) of a Vanadium alloy compound. The pre-mixed solution was then added to 1 kilogram fracturing substrate pre-heated to a temperature between 380 to 400 °F (193 to 204 °C). The substrate and pre-mixed solution were then mixed together with constant agitation. A surfactant (Chembetaine) was added at 2 minutes, 30 seconds into the cycle. Agitation was stopped at 3 minutes, 40 seconds and the coated material was placed into an oven pre-heated to 320 °F (160 °C) for a post bake of 3 minutes, 40 seconds. The coated material was then removed from the oven and cooled to room temperature.

Using the procedure above, a number of vanadium alloy compounds (with varying particle sizes) were prepared for further testing. The results appear in Table 1.

**TABLE 1**

| **Vanadium Alloy Compound** | **Particle Size¹** | **% Concentration of V on Substrate²** | **Substrate Mesh Size³** | **% Loss on Ignition⁴** | **Crush Resistance (wt. % fines)⁵** |
|---|---|---|---|---|---|
| 80% Ferrovanadium alloy | ~ 40 micron | 0.211 | 20/40 | 3.90 | 9.4 |
| 50% Aluminum vanadium alloy | ~ 10 micron | 0.305 | 20/40 | | |
| 80% Vanadium nitride/carbide | ~ 3 micron | | 20/40 | 3.82 | 12.8 |
| 80% Vanadium nitride/carbide | 3 micron | 0.255 | 40/70 | 3.73 | 2.3 |

| | | | | | |
|---|---|---|---|---|---|
| ¹ Particle size as determined by a Coulter Particle Size Analyzer ² Metals Analysis as determined by Atomic Absorption by Acid Digestion ³ Substrate Particle Mesh Size as determined by API (American Petroleum Institute) RP-56, section 5 (now superseded by ISO 13503-2, Section 6) ⁴ Loss on Ignition wherein sample is ashed at 927 °C (1700 °F) for 2 hours and weight loss recorded ⁵ Crush Resistance as determined by *API RP-56,* section 8: | | | | | |

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method for treating a subterranean formation, comprising:
a) disposing in a formation fracture, a proppant, a fracturing fluid, or both comprising a radiation susceptible material, wherein the radiation susceptible material is non-radioactive;
b) positioning a logging tool adjacent at least one portion of the formation fracture after disposing the radiation susceptible material in the formation fracture, wherein the logging tool comprises a first detector apparatus, a neutron emitter, and a second detector apparatus;
c) measuring the gamma-radiation emitted from the at least one portion of the formation fracture using the first detector apparatus for a first period of time;
d) positioning the neutron emitter adjacent the at least one portion;
e) irradiating the at least one portion of the formation fracture for a second period of time;
f) positioning the second detector apparatus adjacent the at least one portion of the formation fracture;
g) measuring the gamma-radiation emitted from any irradiated radiation susceptible material of the proppant, the fracturing fluid, or both, disposed at the at least first portion of the formation fracture for a third period of time; and
h) subtracting the gamma-radiation emitted from the at least one portion of the formation fracture from the gamma-radiation emitted from the irradiated radiation susceptible material of the at least one portion of the formation fracture, wherein steps b) through h) are performed in a single logging pass.

2. The method of claim 1, further comprising:
i) determining a formation fracture height from a difference between the gamma-radiation emitted from the at least one portion of the formation fracture from the gamma-radiation emitted from the irradiated radiation susceptible material adjacent the at least first portion of the formation fracture.

3. The method of claim 2, further comprising:
j) repeating steps b) through h), after the half-life of the radiation susceptible material has expired, to re-determine the formation fracture height.

4. The method of claim 1, wherein the single logging pass comprises performing steps b) to h) for a second portion of the fracture formation.

5. The method of claim 1, wherein the single logging pass comprises a continuous movement or a periodic movement.

6. The method of claim 1, wherein the radiation sensitive material comprises a material selected from the group consisting of lanthanum, dysprosium, europium, lutetium, holmium, samarium, gadolinium, cerium, bromine, manganese, gold, rhenium, tungsten, barium, strontium, germanium, gold, zirconium, tantalum, tungsten, chromium, manganese, boron, vanadium, indium, iridium, cadmium, gallium, rhenium, and combinations thereof.

7. The method of claim 1, wherein the proppant comprises a substrate and a coating disposed thereon, and the radiation susceptible material comprises the substrate, the coating, or both.

8. The method of claim 7, wherein the coating comprises a continuous or non-continuous deposition of the radiation susceptible material having a thickness up to about 20 µm.

9. The method of claim 1, wherein the proppant comprises a vanadium carbon nitride powder.

10. The method of claim 1, wherein the proppant is disposed in a treatment fluid comprising an acid mixture.

11. A proppant, comprising:
a substrate and a coating disposed on the substrate, wherein at least one of the substrate, the coating, or both, comprise one or more radiation susceptible materials selected from the group consisting of a halogen-containing material, a lanthanide series material, and combinations thereof, and wherein the one or more radiation susceptible materials comprise a particle size or layer thickness of less than about 20 µm, and is non-radioactive until bombarded by neutrons.

12. The proppant of claim 11, wherein the coating comprises a continuous or a non-continuous material selected from the group of an organic material, an inorganic material, and combinations thereof.

13. The proppant of claim 11, wherein the one or more radiation susceptible materials comprise the coating and are deposited to a thickness from 0.1 µm to 20 µm.

14. The proppant of claim 12, wherein the organic material comprises a polymeric material including one or more radiation susceptible materials disposed in the polymeric materials or is integrated into the polymer backbone of the polymeric material.

15. The proppant of claim 11, wherein the substrate comprises an organic particle having a filler and one or more radiation susceptible materials are dispersed therein.

16. The proppant of claim 11, wherein the substrate comprises a first radiation susceptible material and the coating comprises a second radiation susceptible material different than the first radiation susceptible material.

17. A treatment fluid comprising the proppant of claim 11.
